# EUROPEAN PATENT APPLICATION

(11) **EP 1 548 684 A2**
(43) Date of publication of application: **29.06.2005**
(21) Application number: 04257933.4
(22) Date of filing: 17.12.2004
(51) Int. Cl.: G08G 1/123

(54) **Apparatus and method for transmitting information from a mobile object to a destination**

(30) Priority: 25.12.2003 JP 2003429238
(71) Applicant: Pioneer Corporation, Tokyo 153-8654 (JP)
(72) Inventor: Tanabe, Masashi, Kawagoe-shi, Saitama 350-8555 (JP)
(74) Representative: Browne, Robin Forsythe, Dr.

(57) **Abstract**

At the start of traveling of a mobile object, a central processing unit (1) calculates a route to a target place and an estimated time of arrival at the target place. After the start of traveling, when the mobile object has come to within a predetermined distance of the target place, a distance calculating unit (21) in the central processing unit (1) detects the distance, and a calling unit (24a) in the central processing unit (1) automatically makes a call to a destination set in association with the target place through an external communication network. In this manner, a person who waits at the target place can be notified of the estimated time of arrival at an appropriate time.

## Description

### BACKGROUND OF THE INVENTION

### 1) Field of the Invention

The present invention relates to transmitting information, however, it is not confined to transmitting information.

### 2) Description of the Related Art

A navigation apparatus installed in a mobile object, such as a vehicle, can guide the mobile object to a target place via an appropriate traveling route, and can estimate time of arrival to the target place. The estimated time of arrival is updated if the roads are congested. As a result, the driver or the passenger can know when they are going to reach the target place. If somebody is waiting at the target place, and if the vehicle is going to be late, the driver or the passenger can contact the waiting person and tell him the exact time at which they are going to reach the target place.

Japanese Unexamined Patent Publication No. H6-104812 discloses a related art. As disclosed therein, when a specific calling operation is performed to a telephone set, even though the power supply of the telephone set is in an off state, a call is automatically made on a predetermined telephone number.

In a navigation apparatus, to notify a waiting person of estimated time of arrival, the waiting person must be notified at an appropriate timing according to the moving state of the mobile object. In a conventional technique, notification of estimated time of arrival cannot be performed at an appropriate timing. For example, in the technique described in Japanese Unexamined Patent Publication No. H6-104812, a call is automatically made when the power supply of the apparatus is turned on. Therefore, a call is automatically made on a predetermined telephone number of a waiting person only at the time at which the mobile object starts to travel. Thus, in this case, the waiting person is notified of an estimated time of arrival that is not very accurate. When an error between the estimated time and the time at which the mobile object actually arrives at the target place is large, it makes it difficult to improve convenience.

### SUMMARY OF THE INVENTION

It is an object of the present invention to at least solve the problems in the conventional technology.

An information transmission apparatus according to an aspect of the present invention includes a distance calculating unit that calculates a distance to a registered place of a mobile object; a communication interface to which an external communicating unit is connected and that establishes communication with a destination through an external communication network; and an information transmitting unit that transmits information to the destination set in association with the registered place when the distance to the registered place calculated by the distance calculating unit is equal to or less than a predetermined distance.

An information transmission apparatus according to another aspect of the present invention includes a distance calculating unit that calculates a distance to a registered place of a mobile object; a communicating unit that establishes communication with a destination through an external communication network; and an information transmitting unit that transmits information to the destination set in association with the registered place when the distance to the registered place calculated by the distance calculating unit is equal to or less than a predetermined distance.

An information transmission apparatus according to still another aspect of the present invention includes an estimated-time-of-arrival calculating unit that calculates an estimated time of arrival at which a mobile object arrives at a registered place; a communication interface to which an external communicating unit is connected and that establishes communication with a destination through an external communication network; and an information transmitting unit that transmits information to the destination set in association with the registered place when the estimated time of arrival calculated by the estimated-time-of-arrival calculating unit is different from a previously calculated estimated time of arrival by an amount equal to or more than a predetermined time.

An information transmission apparatus according to still another aspect of the present invention includes an estimated-time-of-arrival calculating unit that calculates an estimated time of arrival at which a mobile object arrives at a registered place; a communicating unit that establishes communication with a destination through an external communication network; and an information transmitting unit that transmits information to the destination set in association with the registered place when the estimated time of arrival calculated by the estimated-time-of-arrival calculating unit is different from a previously calculated estimated time of arrival by an amount equal to or more than a predetermined time.

An information transmission method according to still another aspect of the present invention includes calculating a distance to a registered place of a mobile object; and transmitting information to a destination set in association with the registered place when the calculated distance to the registered place is equal to or less than a predetermined distance.

An information transmission method according to still another aspect of the present invention includes calculating an estimated time of arrival at which a mobile object arrives at a registered place; and transmitting information to a destination set in association with the registered place when the calculated estimated time of arrival is different from a previously calculated estimated time of arrival by an amount equal to or more than a predetermined time.

Computer program according to still other aspects of the present invention cause a computer to execute the above methods according to the present invention.

Computer-readable recording mediums according to still other aspects of the present invention store therein the above computer program according to the present invention.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a block diagram of an information transmission apparatus according to a first embodiment of the present invention;
Fig. 2 is a detailed block diagram of the central processing unit shown in Fig. 1;
Fig. 3 is a flow chart of a communication establishing process according to a first example;
Fig. 4 is a schematic of contents displayed on a displaying unit shown in Fig. 1 when a mobile object comes close to a target place according to the first example;
Fig. 5 is a schematic of contents displayed on the displaying unit shown in Fig. 1 when a telephone call is made according to the first example;
Fig. 6 is a schematic of contents displayed on the displaying unit shown in Fig. 1 when a mail is transmitted according to the first example;
Fig. 7 is a schematic of contents displayed on the displaying unit shown in Fig. 1 while a mail is transmitted according to the first example;
Fig. 8 is a schematic of contents displayed on the displaying unit shown in Fig. 1 after the mail is transmitted according to the first example;
Fig. 9 is a flow chart of a communication establishing process according to a second example;
Fig. 10 is a flow chart of a communication establishing process according to a third example;
Fig. 11 is a block diagram of an information transmission apparatus according to a second embodiment of the present invention; and
Fig. 12 is a block diagram of an information transmission apparatus according to a third embodiment of the present invention.

### DETAILED DESCRIPTION

Exemplary embodiments of an information transmission apparatus, an information transmission method, and a computer product according to the present invention will be described below.

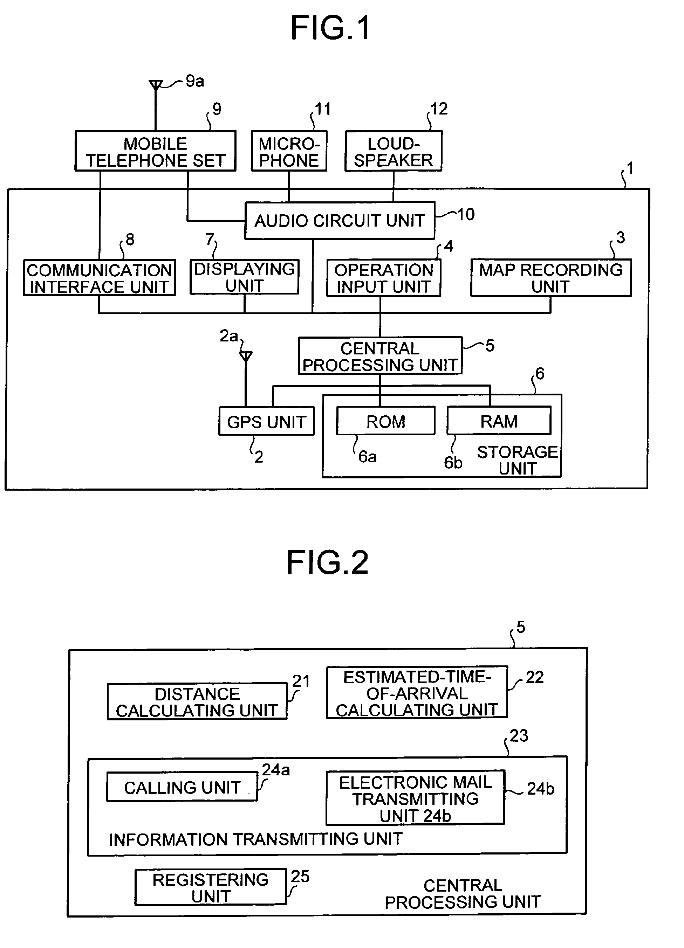

An information transmission apparatus according to a first embodiment of the present invention has a configuration in which a wireless communication device is externally connected. Fig. 1 is a block diagram of the configuration of the information transmission apparatus according to the first embodiment. The information transmission apparatus according to the first embodiment explains a navigation apparatus which guides a traveling route of a vehicle to a registered place.

A navigation system main unit 1 has a GPS unit 2, which detects a current position of a mobile object, a map recording unit 3 on which map information such as a road map of a road on which the mobile object travels, and an operation input unit 4, which performs various setting such as a target place and is connected to a central processing unit 5, which can be implemented as a CPU or the like. The central processing unit 5 has a navigation function that performs arithmetic processing of a traveling route of the mobile object to the target place, estimated time of arrival, and other functions. The central processing unit 5 accesses data to be processed in a storage unit 6 to perform the arithmetic processing. The storage unit 6 includes a ROM 6a in which a processing program of the central processing unit 5 is stored and a RAM 6b in which data for arithmetic processing is stored.

A displaying unit 7 displays map information including a current traveling position of the mobile object. In addition, the displaying unit 7 displays various setting contents obtained by the operation input unit 4, the estimated time of arrival, and other related information. A communication interface unit 8 is connected to the central processing unit 5, and can be connected to a communication network through a mobile telephone set 9 serving as an externally connected wireless communication device. Speech communication and data communication can be performed between the mobile telephone set and a mobile telephone terminal, a telephone set, a personal computer (including a PC and a mobile terminal), or other device capable of such communication held by a waiting person who waits for arrival of the mobile object at a target place. An audio circuit unit 10 is connected to a microphone 11, which is used to input voice in speech communication, and a loudspeaker 12, which outputs audio assist for a traveling route, an operation, and the like and voice in speech communication. Reference numeral 2a denotes an antenna used to receive information from a GPS satellite, and reference numeral 9a denotes an antenna used to be connected to an external communication network in a wireless manner.

Fig. 2 is a block diagram of the internal function of the central processing unit 5. The central processing unit 5 calculates a route between target places set by the operation input unit 4, an estimated time of arrival, and the like. In the arithmetic processing, map information including a mobile object traveling position is read from the map recording unit 3, and a current position of the mobile object is detected from the GPS unit 2 to calculate the current position of the mobile object. Estimated time of arrival is calculated based on the obtained current position of the mobile object, distance information of an estimated traveling route, and other relevant information. The estimated time of arrival is newly calculated at a predetermined timing based on dynamically changed information such as a change in traveling speed of the mobile object, a change in congestion state of a road on which the mobile object is planned to travel, or other changes that can affect the arrival time. Each time the mobile object travels on a road or other type of surface corresponding to the traveling route to the target calculated at the start of traveling, a new traveling route and new estimated time of arrival are calculated (called rerouting).

A distance calculating unit 21 arranged in the central processing unit 5 calculates a traveling distance of the mobile object to the target place based on the distance on the road on the map information. An estimated-time-of-arrival calculating unit 22 calculates estimated time of arrival at the target place based on the rest of the traveling distance calculated by the distance calculating unit 21 and the traveling speed of the mobile object. The estimated time of arrival is newly calculated at a predetermined timing depending on the states that dynamically change. When the rest of the traveling distance calculated by the distance calculating unit 21 is a predetermined distance or less, i.e., when the mobile object comes close to the target place within a predetermined distance, a calling unit 24a makes a call on a predetermined external communication device through the mobile telephone set 9. As will be described later, the calling is performed to perform speech communication to an external communication device. An electronic mail transmitting unit 24b forms an electronic mail when the rest of the traveling distance calculated by the distance calculating unit 21 is a predetermined distance or less, i.e., when the mobile object comes close to the target place within a predetermined distance, and the electronic mail transmitting unit 24b transmits the electronic mail to a predetermined external communication device through the mobile telephone set 9. At this time, the electronic mail transmitting unit 24b converts, for example, the estimated time of arrival into character data and inserts the character data into the text of the electronic mail. The calling unit 24a and the electronic mail transmitting unit 24b have the function of an information transmitting unit 23 that transmits information to a predetermined external communication device each.

Examples in which communication with an external device is established in the configuration will be described below. A registering unit 25 is used to cause a vehicle to register a target place (including a stop-off) as a registered location.

### First Example

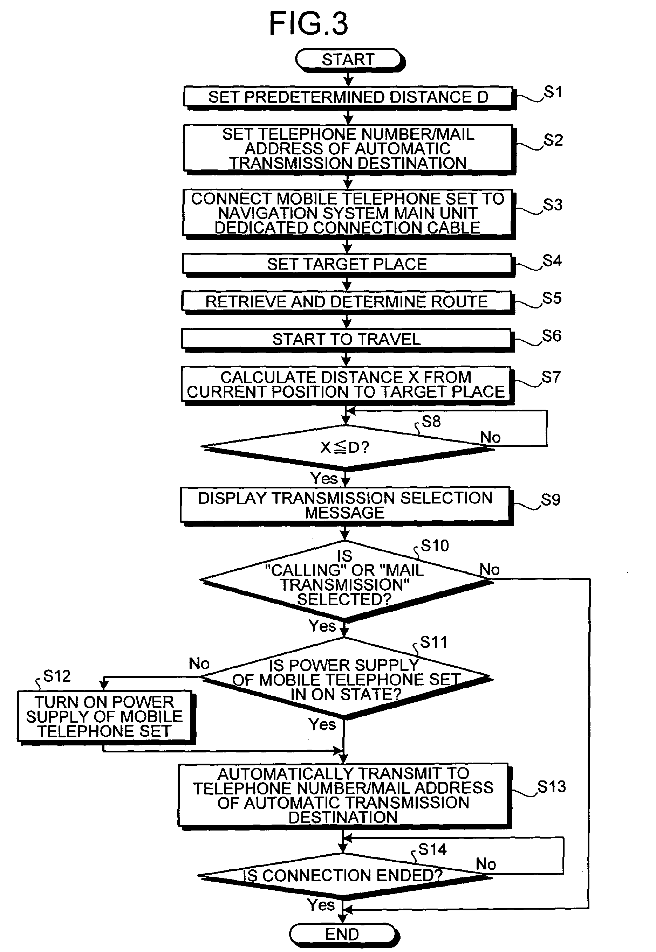

A configuration of the first example is a process that establishes communication when a mobile object comes close to a target place, such as within a predetermined distance. Fig. 3 is a flow chart of a communication establishing process according to the first example.

At the beginning, a predetermined distance D is set through the operation input unit 4 (step S1). The distance D is a distance between the target place and the mobile object when the mobile object comes close to the target place after the mobile object starts to travel. A telephone number of an automatic destination is set (step S2). In addition to speech communication, electronic mail can be used, in which case a mail address of a destination is set. The mobile telephone set 9 is connected to the navigation system main unit 1 by a dedicated connection cable (step S3). These operations are performed as a setup before the mobile object starts to travel.

A target place is set when the mobile object starts to travel (step S4). The central processing unit 5 retrieves and determines an appropriate route between a current position and the position of the target place (step S5). The mobile object starts to travel according to the route (step S6). On the displaying unit 7, the route after the start of traveling is serially displayed as a guidance.

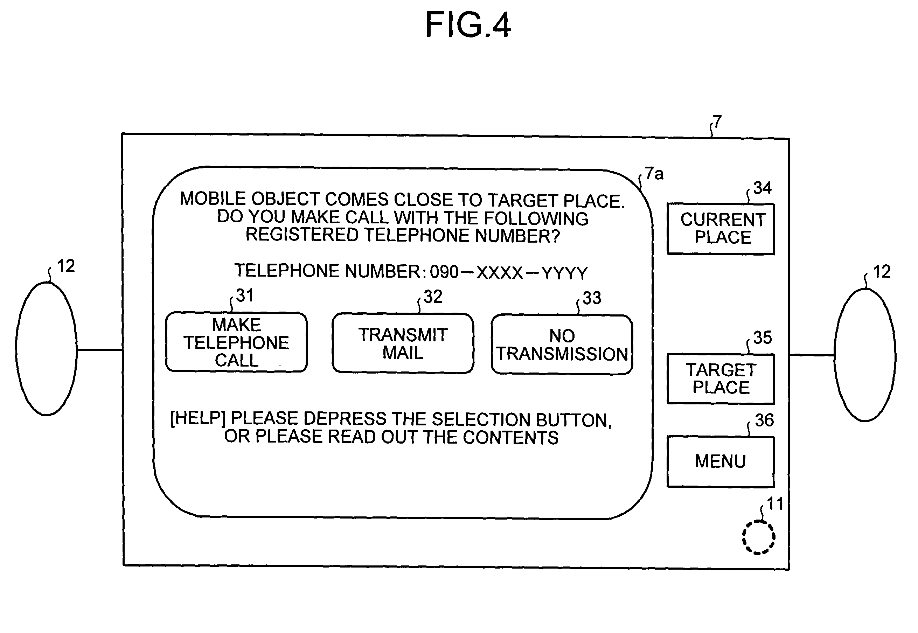

The distance calculating unit 21 of the central processing unit 5 calculate a distance X from a current position to the target place after the mobile object starts to travel (step S7). The distance calculating unit 21 monitors whether the distance X to the target place is not more than the predetermined distance D (X ≤ D) (step S8: loop of No). When the distance X to the target place is not more than the predetermined distance D (step S8: Yes), it is displayed on the displaying unit 7 that the mobile object has come close to the target place, and a transmission selection message is displayed, which asks whether transmission to the target place is performed (step S9). At this time, the display screen displayed on the displaying unit 7 is a screen corresponding to Fig. 4. After the transmission selection message is displayed and when "calling" (including mail transmission) is selected (step S10: Yes), a power supply state is detected of the externally connected mobile telephone set 9 (step S11). If the power supply of the mobile telephone set 9 is an off state (step S11: No), the power supply of the mobile telephone set 9 is turned on (step S12).

Thereafter, the calling unit 24a automatically transmits the information to the automatic destination set in step S2 (step S13). The automatic transmission makes a call with a telephone number. When the telephone number of the calling destination is a waiting person who waits for the mobile object, the waiting person is notified of the estimated time of arrival, i.e., the waiting person can be notified that the mobile object will soon arrive at the target place. The estimated-time-of-arrival calculating unit 22 displays the estimated time of arrival obtained at this time on the displaying unit 7. Thereafter, it is monitored whether the telephone connection is canceled by the end of telephone communication (step S14: loop of No). When the telephone connection is canceled (step S14: Yes), the processes end.

The automatic transmission process in step S13 is not limited to calling on a telephone number. The electronic mail transmitting unit 24b may selectively transmit an electronic mail to the mail address set in step S2. When an electronic mail is used, characters (text data) identifying the estimated time of arrival are inserted into the text of the set mail address to transmit the electronic mail. In this case, the process in step S14 may detect the end of transmission of the mail data. In addition, the process in step S14 can also be designed such that manual inputting of a disconnection command in speech communication is detected.

Fig. 4 is a diagram of display contents of the displaying unit obtained when the mobile object comes close to the target place in the configuration in the first example. An example is shown of a display screen 7a displayed on the displaying unit 7 in the process in step S9 in Fig. 3. The display screen 7a of the displaying unit 7 displays information representing that the mobile object has come close to the target place and information of the telephone number of the automatic calling destination set in step S2. On the displaying unit 7 is arranged the function of the operation input unit 4, which can input a corresponding item by touching the screen. With respect to this information, a "telephone" select button 31, a "mail" select button 32, and a "no-transmission" select button 33 can be selected. When the "telephone" select button 31 is selected, a call is automatically made to the set telephone number. After the call, a voice is produced by the microphone 11, and a voice on the other side is heard from the loudspeaker 12 so that speech communication can be established. The display screen 7a of the displaying unit 7 displays contents, such as a current place 34, a target place 35, and a menu 36 for switching display screens.

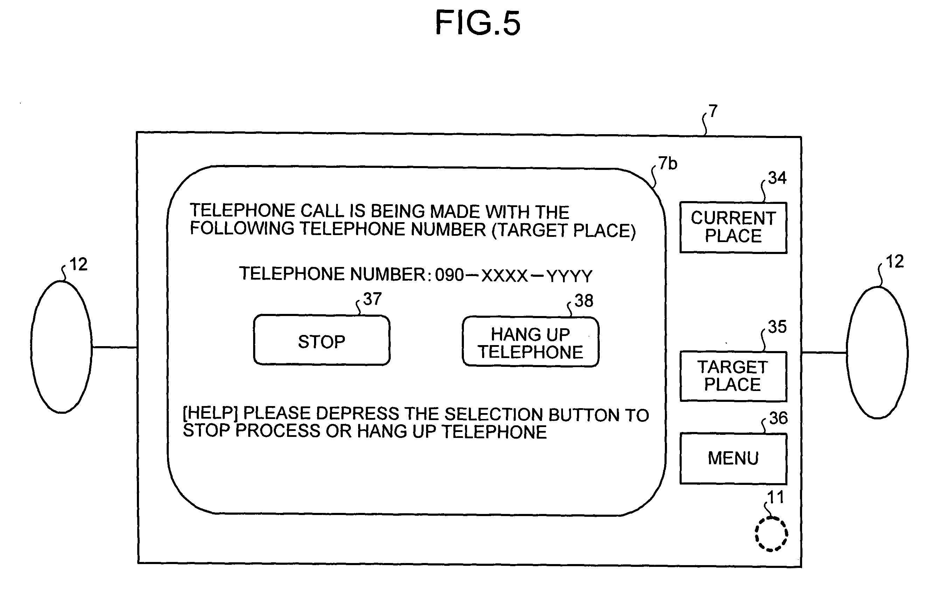

Fig. 5 is a diagram of display contents of the displaying unit obtained when a telephone call is made in the configuration of the first example. An example is shown of a display screen 7b displayed on the displaying unit 7 in the process in step S13 after the "telephone" select button 31 (see Fig. 4) is selected in step S10 in Fig. 3. The display screen 7b of the displaying unit 7 shows information representing that a telephone call is made with the telephone number of a set calling destination. With respect to the information, a "stop" selection button 37 and a "hang-up" selection button 38 can be selected. When the "stop" selection button 37 is selected, making a call with the set telephone number can be stopped. When the "hang-up" selection button 38 is selected, the telephone can be hung up after the call is made with the set telephone number.

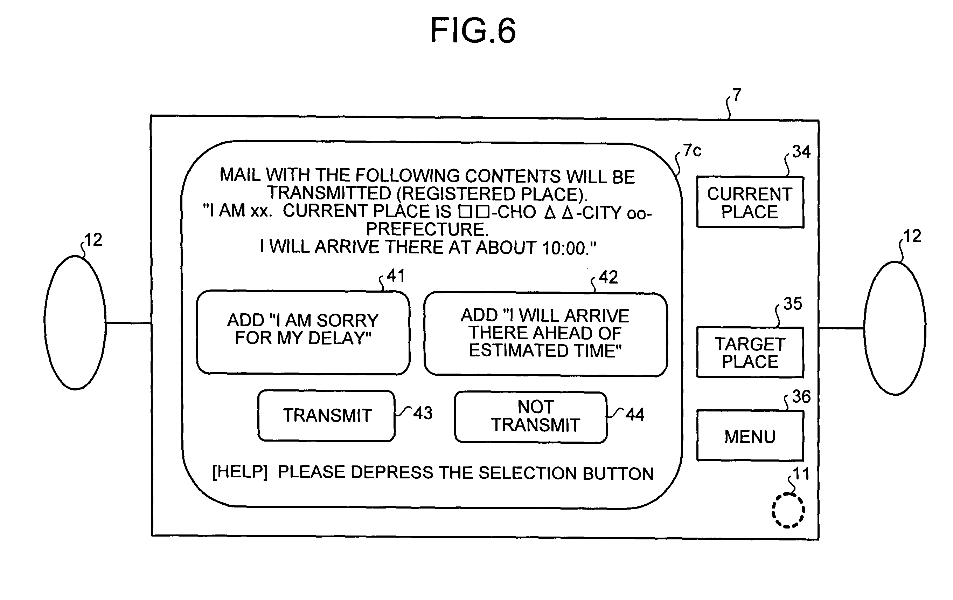

Fig. 6 is a diagram of display contents of the displaying unit when mail is transmitted in the configuration of the first example. An example is shown of a display screen 7c displayed on the displaying unit 7 in the processing in step S13 after the "mail" select button 32 (see Fig. 4) is selected in step S10 in Fig. 3. The display screen 7c of the displaying unit 7 displays a current position and information representing that an electronic mail has been transmitted that includes the estimated time of arrival to the target place calculated by the estimated-time-of-arrival calculating unit 22. With respect to the information, when a "behind" selection button 41 and an "ahead" selection button 42 is selected, the electronic mail can be transmitted having text representing "behind" or "ahead." When a "transmission" selection button 43 is selected, the electronic mail transmitting unit 24b sets a destination mail address in a "destination" column, and the electronic mail is transmitted with text data including the estimated time of arrival of the contents inserted into the text of the electronic mail. When a "no-transmission" selection button 44 is selected, no electronic mail is transmitted.

In the example shown in Fig. 6, a current position and the estimated time of arrival to the target place calculated by the estimated-time-of-arrival calculating unit 22 are displayed on the display screen 7c of the displaying unit 7, and the electronic mail transmitting unit 24b transmits the current position and the estimated time of arrival to the destination. However, the contents of the information transmitted by the electronic mail transmitting unit 24b, in addition to map information including a latitude and a longitude and a current position of the mobile object, can be read from the map recording unit 3 and transmitted.

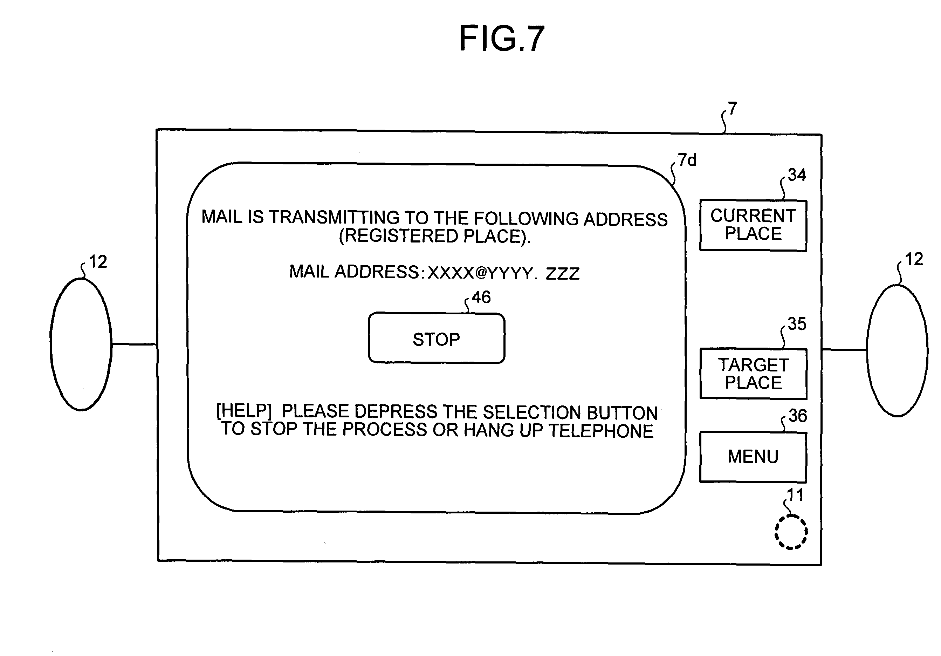

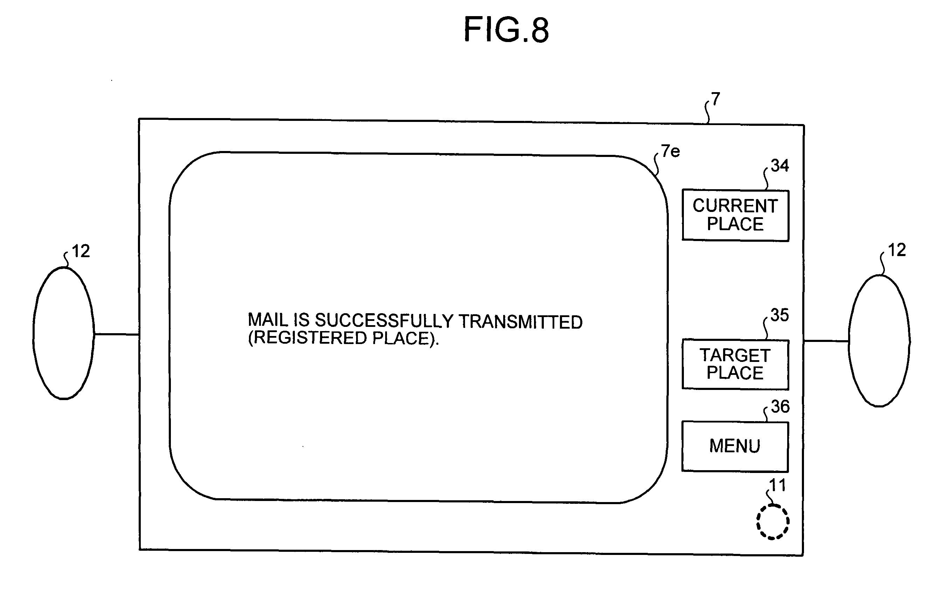

Fig. 7 is a diagram of the display contents of the displaying unit during the process of mail transmission in the configuration of the first example. An example is shown of a display screen 7d displayed on the displaying unit 7 after the "transmission" selection button 43 shown in Fig. 6 is selected. The display screen 7d displays a mail address in the process of transmission. When a "stop" selection button 46 is selected, the transmission can be stopped. Fig. 8 is a diagram of the display contents of the displaying unit after the mail is transmitted in the configuration of the first example. An example is shown of a display screen 7e displayed on the displaying unit 7 after the mail transmission shown in Fig. 7. As shown in Fig. 7, it is displayed that the transmission of the electronic mail to the set mail address has ended.

According to the first example as described above, when the mobile object comes close to the target place, communication with the destination can be automatically established at an appropriate timing, and a waiting person who waits at the target place can be notified that the mobile object will soon arrive at the target place. In this manner, even though a traveling state changes due to, for example, congestion of a road after the mobile object starts to travel, the destination can be notified of the estimated time of arrival as accurately as possible. Furthermore, communication with the destination can be prevented from being forgotten, and the navigation function can be more effectively used.

### Second Example

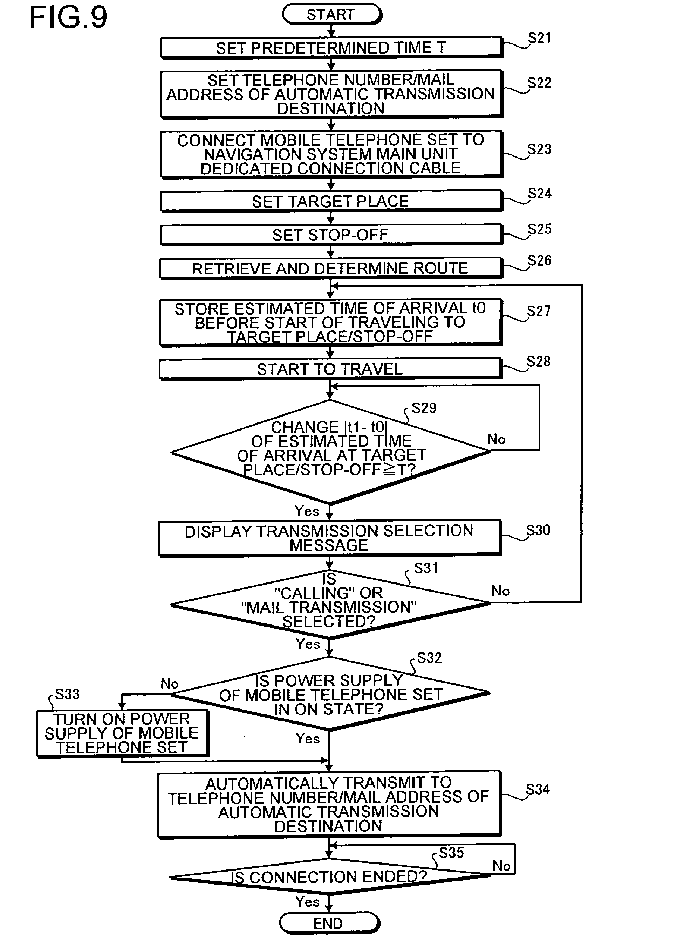

The configuration of the second example is a process that establishes communication when a traveling state of a mobile object changes to change the estimated time of arrival at a target place. Fig. 9 is a flow chart of a communication establishing process according to the second example.

Initially, a predetermined time T is set through the operation input unit 4 (step S21). The time T is time falling within an allowed range as behind or ahead of time when an actual estimated time of arrival is different from an estimated time of arrival t0 calculated by the estimated-time-of-arrival calculating unit 22 before the start of traveling. When the traveling state changes, such as due to congestion of a road, a change |t1 - t0| between an estimated time of arrival t1 set after the start of traveling and the estimated time of arrival t0 set before the start of traveling exceeds the time T, a call is made to the destination.

A telephone number of an automatic transmission destination is set (step S22). In addition to speech communication, an electronic mail can also be used. In this case, the mail address of the destination is set. The mobile telephone set 9 is connected to the navigation system main unit 1 by a dedicated connection cable (step S23). These operations are performed as a setup before the mobile object starts to travel.

When the mobile object starts to travel, a target place (step S24) and a stop-off (as needed) (step S25) are set. The central processing unit 5 retrieves and determines an appropriate route which connects a current position and the position of the target place (step S26). The estimated-time-of-arrival calculating unit 22 calculates the estimated time of arrival t0 to the target place (including a set-off on the way). The estimated-time-of-arrival calculating unit 22 stores the calculated estimated time of arrival t0 before the start of traveling in the storage unit 6 (step S27). The mobile object starts to travel according to the retrieved route (step S28). The displaying unit 7 serially displays a route obtained after the start of traveling as a guide.

Thereafter, if the traveling state of the mobile object changes, such as due to congestion or the like of a road, and an estimated time of arrival is behind (or ahead of) the estimated time of arrival to set before the start of traveling, then it is monitored whether a change |t1 - t0 | between the estimated time of arrival set before the start of traveling and the estimated time of arrival set after the start of traveling is equal to or more than the time T (step S29: loop of No). When the change | t1 - t0 between the estimated time of arrival before and after the start of traveling is equal to or more than the time T or more (step S29: Yes), a corresponding transmission selection is displayed on the displaying unit 7 (step S30). For example, when the time T is 30 minutes, i.e., the estimated time of arrival set after the start of traveling is 30 minutes behind the estimated time of arrival t0 calculated in step S26 before the start of traveling, a transmission selection message representing that there has been a delay is displayed on the displaying unit 7. For example, as an example of the display screen displayed on the displaying unit 7 at this time in the case of a mail transmission, the display screen 7c shown in Fig. 6 can be displayed. When there has been a delay, a text representing that arrival is delayed may be transmitted together with an electronic mail without selecting the "delay" selection button 41. When the "transmission" selection button 43 is selected (step S31: Yes), the CPU shifts to a calling process (mail transmission). When the "transmission" selection button 43 is not selected (step S31: No), the CPU returns to step S27.

In transmission, the power supply state of the externally connected mobile telephone set 9 is detected (step S32). When the power supply of the mobile telephone set 9 is in an off state (step S32: No), the power supply of the mobile telephone set 9 is turned on (step S33). Thereafter, the electronic mail transmitting unit 24b automatically transmits an electronic mail to the mail address of the automatic transmission destination set in step S22 (step S34). In this case, when the mail address of the automatic transmission destination is a waiting person who waits at the target place, the waiting person can be notified of the estimated time of arrival and information representing that arrival will be delayed with an electronic mail. At this time, the mail address is the mail address of the mobile telephone set 9, and the waiting person can immediately know the arrival of the electronic mail. Any configuration that notifies the waiting person of the reception of an electronic mail by using a PC without using the mobile telephone set 9 enables the waiting person to know the arrival of the electronic mail without any loss of time. Upon completion of transmission of the electronic mail, it is monitored whether the connection is ended (step S35: loop of No). When the connection is canceled (step S35: Yes), the process is ended.

The process in step S34 can be achieved not only by transmission of an electronic mail by the electronic mail transmitting unit 24b but also by making a call with the telephone number set by the calling unit 24a in step S22 and speech communication. The process in step S27 can be performed not only to a target place but also to a plurality of stop-offs located along the route to the target place. In this case, the process may be performed such that the estimated time of arrival at the target place is replaced with an estimated time of arrival at each of the plurality of stop-offs. Each time the mobile object visits each stop-off to delay the arrival at the target place, an automatic calling or transmission of an electronic mail can be performed to a set transmission destination such as a waiting person. The destination can be notified of a more exact estimated time of arrival.

According to the second example described above, when arrival at a target place is delayed or advanced, communication with a destination can be established at an appropriate timing, and a waiting person who waits for the arrival can be notified that the mobile object will soon arrive at the target place. In this manner, even though a traveling state changes, such as due to congestion or the like of a road, after the mobile object starts to travel, the destination can be notified of the estimated time of arrival as accurately as possible. Furthermore, communication with the destination can be prevented from being forgotten, and the navigation function can be more effectively used.

### Third Example

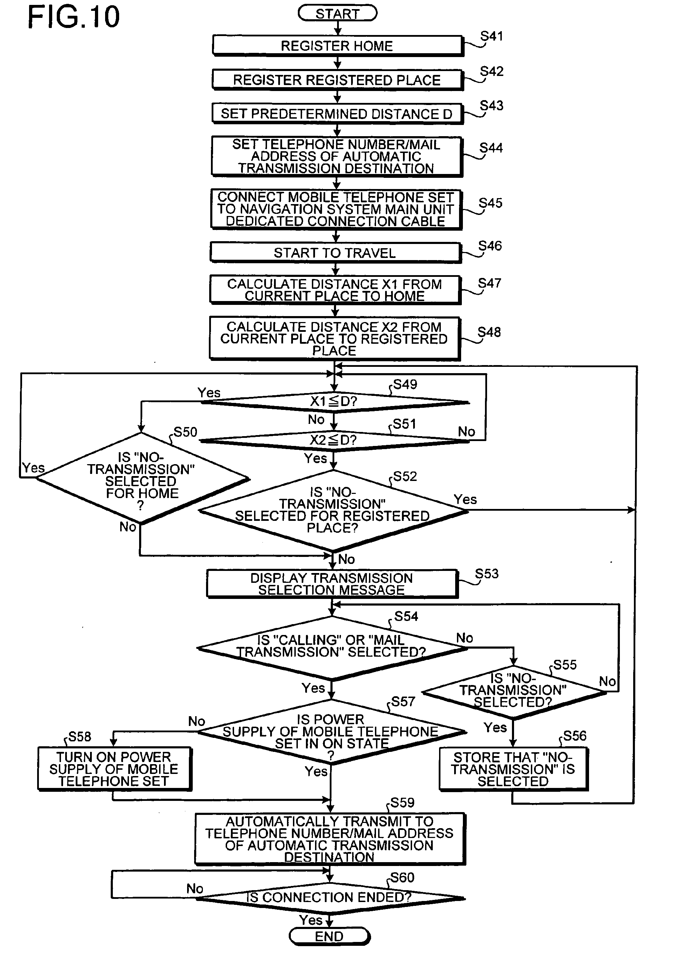

The configuration of the third embodiment is a process that establishes communication when a mobile object comes close to predetermined user's home or a predetermined registered place even though a target place is not set. Fig. 10 is a flow chart of a communication establishment process according to the third example.

At the beginning, the position of a user's home is registered through the operation input unit 4 (step S41). If a user has a place where she/he frequently visits, that place is registered (step S42). With reference to Fig. 2, not only is the target place set at the start of traveling as described in the first and second examples held in the registering unit 25, but also a plurality of the user's homes or a plurality of registered places can be held. A predetermined distance D is set through the operation input unit 4 (step S43). The distance D is a distance between the mobile object and the home or between the mobile object and a registered place when the mobile object comes close to the home or the registered place after the start of traveling of the mobile object. A telephone number or a mail address of an automatic transmission destination is set (step S44). For example, a telephone number (or a mail address) of the home registered in step S41 and a telephone number (or a mail address) of the registered place registered in step S42 are set. The mobile telephone set 9 is connected to the navigation system main unit 1 by a dedicated connection cable (step S45). These operations are performed as a setup before the mobile object starts to travel.

Thereafter, when the mobile object starts to travel (step S46), the distance calculating unit 21 of the central processing unit 5 calculates a distance X1 between a current place to the home (step S47). The distance calculating unit 21 also calculates a distance X2 between the current place and the registered place (step S48). When the current place comes close to the home or the registered place, the calling unit 24a automatically makes a call. More specifically, it is monitored whether the distance X1 to the home is not more than the predetermined distance D (X1 ≤ D) (step S49: No), and it is monitored whether the distance X2 to the registered place is not more than the predetermined distance D (X2 ≤ D) (step S51: loop of No).

When the distance X1 to the home is not more than the predetermined distance D (step S49: Yes), "no-transmission" is not selected at first (step S50: No). For this time, the displaying unit 7 displays that the mobile object has come close to the home, and a transmission selection message is displayed that asks whether transmission to the home is performed (step S53). Similarly, when the distance X2 to the registered place is not more than the predetermined distance D (step S51: Yes), "no-transmission" is not selected at first (step S52: No). For this time, the displaying unit 7 displays that the mobile object has come close to the registered place, and a transmission selection message is displayed that asks whether transmission to the registered place is performed (step S53). At this time, Fig 4 shows an example of a display screen displayed on the displaying unit 7. The telephone number of the home is displayed when the mobile object comes close to the home, and the telephone number of the registered place is displayed when the mobile object comes close to the registered place. In addition, "telephone," "mail," and "no-transmission" selection buttons 31, 32, and 33 can be selected. When "no-transmission" is selected for the home or the registered place (step S50: Yes and step S52: Yes), the CPU returns to step S49 to continuously calculate the distances.

After the transmission selection message is displayed in step S53, "calling" (including mail transmission) is selected (step S54: Yes), and a power supply state is detected of the externally connected mobile telephone set 9 (step S57). When the power supply of the mobile telephone set 9 is in an off state (step S57: No), the power supply of the mobile telephone set 9 is turned on (step S58), and the CPU shifts to step S59. When "calling" or "mail" is not selected in step S54 (step S54: No), and when "no-transmission" is detected (step S55: Yes), it is stored in the storage unit 6 that "no-transmission" is selected (step S56), and the CPU returns to step S49. On the other hand, when "no-transmission" is not selected (step S55: No), the CPU returns to step S54. Thus, in the later steps, the contents of the storage unit 6 are referred to each time the mobile object comes close to the home or a registered place. When the storage contents are "no-transmission," the transmission selection message is not displayed on the displaying unit 7. At a result, a cumbersome display can be canceled.

When the power supply of the mobile telephone set 9 is turned on in step S58, and when the power supply of the mobile telephone set 9 is set in an on state in step S57 (step S57: Yes), the calling unit 24a automatically makes a call with the telephone number of the automatic transmission destination set in step S44 for any one of the close home and a close registered place (step S59), and speech communication is started with a destination on which the call is made (or transmits a mail). Thereafter, it is monitored whether the telephone connection is canceled upon completion of speech communication (step S60: loop of No). When the telephone connection is canceled (step S60: Yes), the process is ended.

The explanation is made by exemplifying calling performed by the calling unit 24a. As in the first and second example, a configuration in which formation and transmission of an electronic mail by the electronic mail transmitting unit 24b may also be employed.

According to the third example, when a mobile object comes close to a registered place such as a home or an office, the mobile object can automatically communicate with a destination of the home or the registered place, and a waiting person or the like who waits at home or the registered place can be notified that the mobile object will soon arrive at the corresponding place. in this manner, a waiting person at the home or the registered place where the mobile object frequently goes and returns can be notified of estimated time of arrival as accurately as possible. Furthermore, communication with the waiting person can be prevented from being forgotten, and the navigation function can be used more effectively.

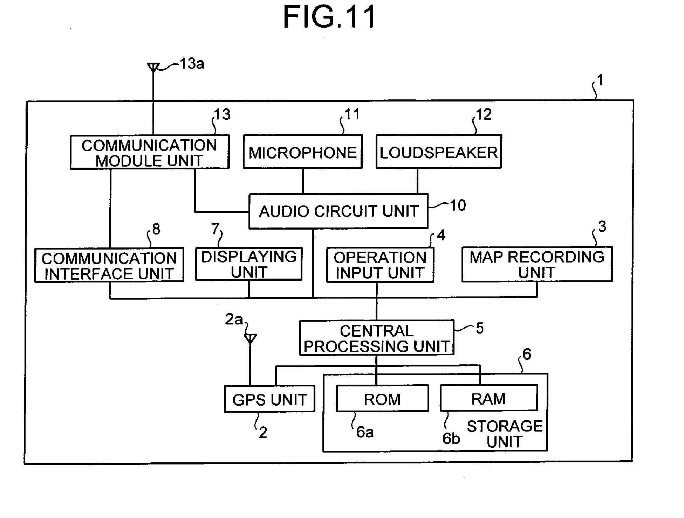

An information transmission apparatus according to a second embodiment of the present invention will be described below. Fig. 11 is a block diagram of the configuration of an information transmission apparatus according to the second embodiment. The second embodiment corresponds to a configuration of an information transmission apparatus in which a wireless communication device is built. The same reference numerals as in Fig. 1 denote the same parts in Fig. 11.

As shown in Fig. 11, a communication module unit 13 is built in a navigation system main unit 1, and is connected to a communication interface unit 8. Reference numeral 13a denotes an antenna used to be connected to an external communication network. The communication interface unit 8 is connected to a central processing unit 5, and can be connected to the external communication network through the communication module unit 13 at a predetermined timing. The communication module unit 13 can include a communication circuit that can be connected to, e.g., a mobile telephone network serving as a communication network. The communication module unit 13 communicates with an external communication device. In this manner, the navigation system main unit 1 can be designed to build the communication module unit 13 in the navigation system main unit 1. In this case, the automatic transmission processes described in the examples (first, second, and third examples) of the first embodiment can be performed in the same manner. In the first embodiment, since the mobile telephone set 9 is an externally connected device, a step is performed (for example, step S11 in Fig. 3, step S32 in Fig. 9, and step S57 in Fig. 10) of turning on the power supply of the mobile telephone set 9. However, such a step of turning on the power supply can be made unnecessary.

As in the second embodiment described above, the configuration in which the communication module, which can be connected to an external communication network, is built may not only be a navigation system, but also may be a mobile telephone set having a navigation function. According to the configuration of the second embodiment, when a mobile object comes close to a target place as in the first embodiment, when an estimated time of arrival changes, or when the mobile object comes close to a registered place, such as a home or an office, a call can be automatically made to a destination, or an electronic mail can be transmitted. A waiting person can be notified that the mobile object will soon arrive at the target place. In addition, a waiting person at the home or the registered place where the mobile object frequently goes and returns can be notified of the estimated time of arrival as accurately as possible without setting a target place each time the mobile object moves. Furthermore, communication with the waiting person can be prevented from being forgotten, and the navigation function can be more effectively used.

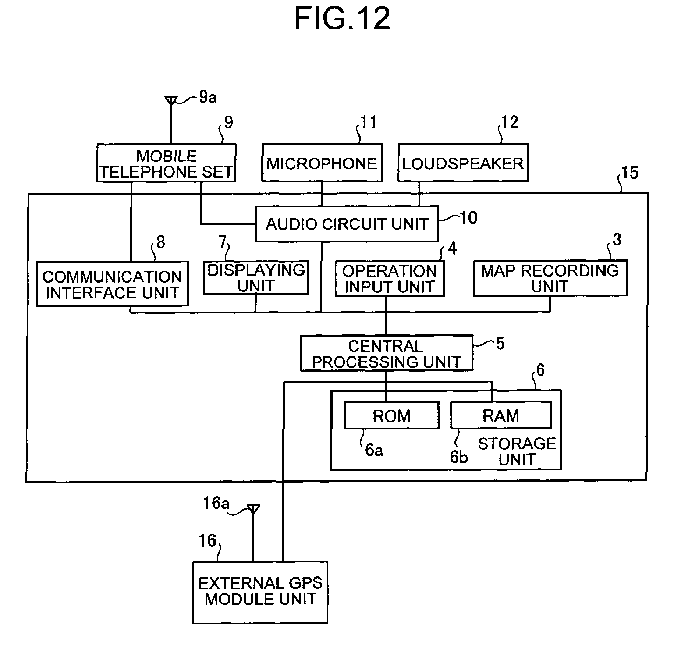

A third embodiment of the present invention will be described below. Fig. 12 is a block diagram of the configuration of an information transmission apparatus according to the third embodiment. The third embodiment corresponds to the configuration of a terminal device to which a navigation function can be added. The same reference numerals as in Fig. 1 denote the same parts in Fig. 12.

As shown in Fig. 12, a terminal device 15 has a configuration to which a navigation function can be added. For example, the terminal device 15 can be implemented, for example, as a pocket computer or the like. A mobile telephone set 9 is externally connected to the terminal device 15, and an external GPS module unit 16 is externally connected to the terminal device 15. Reference numeral 16a denotes an antenna used to receive information from a GPS satellite.

As described above, even though the mobile telephone set 9 and the external GPS module unit 16 are externally connected to the terminal device 15, the calling process and the transmission process of an electronic mail described in the examples (first, second, and third examples) of the first embodiment can be similarly performed. The terminal device 15 can also be implemented by using a GPS function and a connection function to a mobile telephone network.

The embodiments described above exemplify speech communication using telephones and transmission of an electronic mail. Voice synthesis, reading of a voice file registered in advance, or voice recognition can also be used. For example, when a mobile object comes close to a target place, a call is made to a destination. Voice corresponding to a stylized sentence stored in advance is synthesized by an audio circuit unit 10 to communicate to the destination the stylized sentence as a voice. In addition, when a mobile object comes close to a target place, an electronic mail may be transmitted to a destination. Voice acquired through the microphone 11 is converted into character data (text data) by voice recognition, and the character data is inserted into the text of the electronic mail so that the electronic mail can be transmitted.

As described above, according to the information transmission apparatus, the information transmission method, the program thereof, and the recording medium on which the program is recorded, depending on a traveling state of a mobile object to a place toward which the mobile object moves, a necessary destination can be notified of an estimated time of arrival at an appropriate timing. In this manner, the navigation function can be effectively used, and the destination can be properly notified of an accurate estimated time of arrival. In particular, since a driver of a mobile object can automatically make a call at an appropriate timing without regard to communication with a destination, the driver can concentrate on driving, which make it possible to improve safe driving.

The information transmission method described in the embodiment can be realized by executing a prepared program with a computer such as a personal computer or a workstation. The program is recorded on a recording medium such as a hard disk, a flexible disk, a CD-ROM, an MO (magneto-optical disc), or a DVD which can be read by a computer. The program is executed by being read from the recording medium by the computer. The program may be a transmission medium which can be distributed through a network such as the Internet.

The present document incorporates by reference the entire contents of Japanese priority document, 2003-429238 filed in Japan on December 25, 2003.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An information transmission apparatus comprising:
a distance calculating unit (21) that calculates a distance to a registered place of a mobile object;
a communication interface (8) to which an external communicating unit (9) is connected and that establishes communication with a destination through an external communication network; and
an information transmitting unit (23) that transmits information to the destination set in association with the registered place when the distance to the registered place calculated by the distance calculating unit (21) is equal to or less than a predetermined distance.

2. An information transmission apparatus comprising:
a distance calculating unit (21) that calculates a distance to a registered place of a mobile object;
a communicating unit (13) that establishes communication with a destination through an external communication network; and
an information transmitting unit (23) that transmits information to the destination set in association with the registered place when the distance to the registered place calculated by the distance calculating unit (21) is equal to or less than a predetermined distance.

3. An information transmission apparatus comprising:
an estimated-time-of-arrival calculating unit (22) that calculates an estimated time of arrival at which a mobile object arrives at a registered place;
a communication interface (8) to which an external communicating unit (9) is connected and that establishes communication with a destination through an external communication network; and
an information transmitting unit (23) that transmits information to the destination set in association with the registered place when the estimated time of arrival calculated by the estimated-time-of-arrival calculating unit (22) is different from a previously calculated estimated time of arrival by an amount equal to or more than a predetermined time.

4. An information transmission apparatus comprising:
an estimated-time-of-arrival calculating unit (22) that calculates an estimated time of arrival at which a mobile object arrives at a registered place;
a communicating unit (13) that establishes communication with a destination through an external communication network; and
an information transmitting unit (23) that transmits information to the destination set in association with the registered place when the estimated time of arrival calculated by the estimated-time-of-arrival calculating unit (22) is different from a previously calculated estimated time of arrival by an amount equal to or more than a predetermined time.

5. The information transmission apparatus according to any one of claims 1 to 4, wherein the information transmitting unit (23) is an electronic mail transmitting unit (24b) that transmits an electronic mail to a mail address of the destination set in association with the registered place.

6. The information transmission apparatus according to any one of claims 1 to 4, wherein the information transmitting unit (23) is a calling unit (24a) that calls the destination set in association with the registered place.

7. The information transmission apparatus according to claim 5 or 6, comprising:
a navigation unit that guides the mobile object to the registered place.

8. The information transmission apparatus according to claim 6, wherein when a power supply of the communicating unit (13) is in an off state, the calling unit (24a) performs the calling after the power supply is turned on.

9. The information transmission apparatus according to claim 5, wherein the electronic mail transmitting unit (24b) inserts the distance calculated by the distance calculating unit (21) into the electronic mail as character data.

10. The information transmission apparatus according to claim 5, wherein the electronic mail transmitting unit (24b) inserts the estimated time of arrival calculated by the estimated-time-of-arrival calculating unit (22) into the electronic mail as character data.

11. An information transmission method comprising:
calculating a distance to a registered place of a mobile object; and
transmitting information to a destination set in association with the registered place when the calculated distance to the registered place is equal to or less than a predetermined distance.

12. An information transmission method comprising:
calculating an estimated time of arrival at which a mobile object arrives at a registered place; and
transmitting information to a destination set in association with the registered place when the calculated estimated time of arrival is different from a previously calculated estimated time of arrival by an amount equal to or more than a predetermined time.

13. The information transmission method according to claim 11 or 12, comprising:
guiding the mobile object to the registered place.

14. A computer program operable on a computer that is configured to cause the computer to execute the method according to any one of claims 11 to 13.

15. A computer-readable recording medium operable on a computer on which the computer program according to claim 14 is recorded.
